# DEMANDE DE BREVET EUROPEEN

(11) **EP 1 462 688 A1**
(43) Date de publication de la demande: **29.09.2004**
(21) Numéro de dépôt: 04356039.0
(22) Date de dépôt: 23.03.2004
(51) Int. Cl.: F16J 15/32

(54) **Garniture d'étanchéité et de réalimentation**

(30) Priorité: 24.03.2003 FR 0303533
(71) Demandeur: Freudenberg, 71000 Macon (FR)
(72) Inventeur: Gravier, Stéphane, 69007 Lyon (FR)
(74) Mandataire: Thibault, Jean-Marc

(57) **Abrégé**

La coupelle d'étanchéité annulaire d'axe Δ, dite de ré-alimentation, qui est destinée à être disposée entre un cylindre et un piston hydrauliques et qui présente une section axiale en « U » comprend :
■ une branche statique **(10)** définissant une lèvre annulaire d'étanchéité statique,
■ une branche dynamique **(12)** définissant une lèvre annulaire d'étanchéité dynamique,
■ et une âme **(14)** reliant les branches statique **(10)** et dynamique **(12)** et définissant, à l'opposé des lèvres, un talon annulaire **(15)**,

Selon l'invention, la coupelle est caractérisée en ce que la surface de raccordement **(24)**, entre la branche statique **(10)** et l'âme **(14)**, située à l'opposé du talon **(15)**, présente une forme concave correspondant à une réduction locale des épaisseurs de la branche statique **(10)** et de l'âme **(14)** au niveau de la région de raccordement entre la lèvre statique et l'âme **(14),** de manière à définir une zone de rotation **(21)**.

## Description

La présente invention concerne le domaine technique des garnitures d'étanchéité destinées à être adaptées entre deux pièces mobiles l'une par rapport à l'autre.

Dans une application préférée, l'invention concerne les garnitures ou coupelles d'étanchéité destinées à être interposées entre deux pièces coaxiales, telles que, par exemple, un cylindre et un piston d'un système hydraulique de commande de freins.

Dans le cadre d'une telle application, il est connu de mettre en oeuvre, dans un système de commande de frein, par exemple, une coupelle d'étanchéité qui assure une double fonction, à savoir, d'une part, une fonction d'étanchéité permettant d'isoler les deux chambres situées de part et d'autre de la coupelle et, d'autre part, d'une fonction de clapet anti-retour permettant une légère fuite, dite de ré-alimentation, d'une chambre vers l'autre mais empêchant, au contraire, toute circulation dans le sens inverse lorsque le système doit exercer une pression de freinage.

A cet effet, la coupelle d'étanchéité annulaire présente une section axiale en « U » qui comprend une branche statique, définissant une lèvre annulaire d'étanchéité statique, une branche dynamique, définissant une lèvre annulaire d'étanchéité dynamique, et une âme reliant les branches statique et dynamique et définissant, à l'opposé de la lèvre, un talon.

Les coupelles d'étanchéité annulaires, dites de ré-alimentation, selon l'art antérieur présentent, généralement, une épaisseur uniforme et, si elles assurent leur double fonction d'isolation dans un sens et de clapet anti-retour dans un autre sens de fonctionnement, elles possèdent, toutefois, les inconvénients de ne pas présenter, d'une part, une grande sensibilité à la ré-alimentation, de sorte qu'il est nécessaire que la différence de pression entre les deux chambres soit relativement importante pour soulever la lèvre dynamique et assurer cette ré-alimentation et, d'autre part, de ne pas présenter une résistance optimale à l'usure et, notamment, au phénomène d'extrusion susceptible d'apparaître au cours de l'utilisation et, plus particulièrement, en fin de vie du système de freinage, de sorte que les coupelles selon l'art antérieur sont susceptibles de libérer des particules pouvant altérer le fonctionnement du système.

Ainsi, il apparaît le besoin d'un nouveau type de coupelle de ré-alimentation qui présente, à la fois, une plus grande sensibilité au remplissage, c'est-à-dire ne nécessitant pas une différence de pression importante entre les chambres amont et aval de la coupelle, tout en offrant une résistance au phénomène d'extrusion supérieure à celle des coupelles d'étanchéité selon l'art antérieur. L'invention vise, également, à offrir une coupelle de ré-alimentation possédant ces qualités de sensibilité et de résistance, tout en présentant un encombrement réduit.

Afin d'atteindre ces objectifs, l'invention concerne une coupelle d'étanchéité annulaire d'axe Δ, dite de ré-alimentation, qui est destinée à être disposée entre un cylindre et un piston hydraulique et qui présente une section axiale en « U » comprenant :
■ une branche statique définissant une lèvre annulaire d'étanchéité statique,
■ une branche dynamique définissant une lèvre annulaire d'étanchéité dynamique,
■ et une âme reliant les branches statique et dynamique et définissant, à l'opposé des lèvres, un talon annulaire.

Selon l'invention, cette coupelle, dite de ré-alimentation, est caractérisée en ce que la surface de raccordement, entre la branche statique et l'âme, située à l'opposé du talon, présente une forme concave correspondant à une réduction locale des épaisseurs de la branche statique et de l'âme au niveau de la région de raccordement, entre la lèvre statique et l'âme, de manière à définir une zone de flexion.

Afin d'obtenir une flexibilité optimale, l'épaisseur minimale de la branche statique, dans la zone de flexion, vaut, de préférence mais non exclusivement, entre 60 % et 85 % de l'épaisseur maximale de la branche statique et, de manière plus particulièrement préférée, entre 65 % et 80 %.

Selon une autre caractéristique de l'invention, afin d'assurer une bonne stabilité de la lèvre d'étanchéité statique lors des mouvements de la lèvre d'étanchéité dynamique, les faces interne et externe de la lèvre d'étanchéité statique sont, de préférence mais non nécessairement, sensiblement parallèles en dehors de la zone de flexion.

Selon une autre caractéristique de l'invention, afin d'obtenir une bonne mise en contrainte de la lèvre statique lors du montage de la coupelle dans son logement, entre le piston et le cylindre, les faces interne et externe de la lèvre statique sont, de manière préférée mais non exclusive, forment, avec l'axe Δ, un angle compris entre 0° et 10°.

Selon une autre caractéristique, préférée mais non strictement nécessaire, de l'invention, afin d'offrir une souplesse à la lèvre d'étanchéité dynamique, permettant une réalimentation avec un différentiel de pression réduit entre les chambres amont et aval, situées de part et d'autre de la coupelle d'étanchéité, les surfaces interne et externe de la lèvre d'étanchéité dynamique convergent l'une vers l'autre en direction du talon de la coupelle.

Afin de contribuer à cette recherche de souplesse, selon une autre caractéristique de l'invention, les faces interne et externe de la lèvre d'étanchéité dynamique sont tronconiques et forment, avec l'axe Δ, un angle compris entre 15° et 30°.

Selon une caractéristique préférée, mais non strictement nécessaire de l'invention, afin d'offrir à la coupelle une bonne résistance au phénomène d'extrusion résultant du frottement intervenant au niveau de la lèvre d'étanchéité dynamique, la surface de raccordement, entre l'âme et la branche dynamique, située à l'opposé du talon, est, en partie au moins, convexe et correspond à une augmentation locale des épaisseurs de l'âme et de la branche dynamique définissant une zone de rigidité.

Selon une autre caractéristique de l'invention, afin d'optimiser la résistance de la zone de rigidité, la surface de raccordement, située à l'opposé du talon entre la zone de flexion et la zone de rigidité, présente, de façon préférée mais non exclusive, au moins un point d'inflexion.

Afin d'optimiser le comportement différentiel entre la zone de flexion et la zone de rigidité, selon une autre caractéristique de l'invention, la surface de raccordement, située à l'opposé du talon, entre la zone de flexion et la zone de rigidité, présente au moins un point d'inflexion.

La résistance de la zone de rigidité se trouve alors optimisée lorsque l'épaisseur minimum de l'âme, dans la zone de flexion, vaut, de préférence mais non nécessairement, entre 45 % et 80 % de l'épaisseur maximale de l'âme dans la zone de rigidité et, de façon plus particulièrement préférée, entre 68 % et 75 %. L'épaisseur maximale est, selon l'invention, choisie en fonction de la sensibilité de ré-alimentation recherchée.

Selon une caractéristique, préférée mais non strictement nécessaire de l'invention, afin d'offrir une résistance optimale à l'extrusion, la surface du talon, d'une part, est sensiblement plane et perpendiculaire à l'axe Δ de la coupelle et, d'autre part, forme un angle sensiblement droit avec la surface latérale de l'âme délimitant la zone de rigidité et raccordant le talon à la lèvre d'étanchéité dynamique.

Selon une forme préférée de réalisation, la coupelle d'étanchéité est destinée à être adaptée dans une gorge annulaire, aménagée dans le cylindre, de sorte que la lèvre d'étanchéité statique est située sur l'extérieur de la coupelle, tandis que la lèvre d'étanchéité dynamique est située sur l'intérieur de la coupelle.

Toutefois, au sens de l'invention, la coupelle pourrait être adaptée sur une gorge du piston, la lèvre d'étanchéité statique serait alors située sur l'intérieur de la coupelle, tandis que la lèvre d'étanchéité dynamique serait située sur l'extérieur de la coupelle.

Diverses autres caractéristiques de l'invention ressortent de la description ci-dessous effectuée en référence aux dessins annexés qui illustrent une forme non limitative de réalisation d'une coupelle d'étanchéité selon l'invention.
La **fig. 1** est une perspective, partiellement arrachée, montrant une coupelle d'étanchéité selon l'invention en vue de dessus.
La **fig. 2** est une perspective, analogue à la **fig. 1,** de la coupelle en vue de dessous.
La **fig. 3** est une demi-coupe axiale de la coupelle, telle qu'illustrée aux **fig. 1** et **2**.
Les **fig. 4** et **5** sont des sections axiales d'une coupelle conforme à l'invention, en situation de travail.

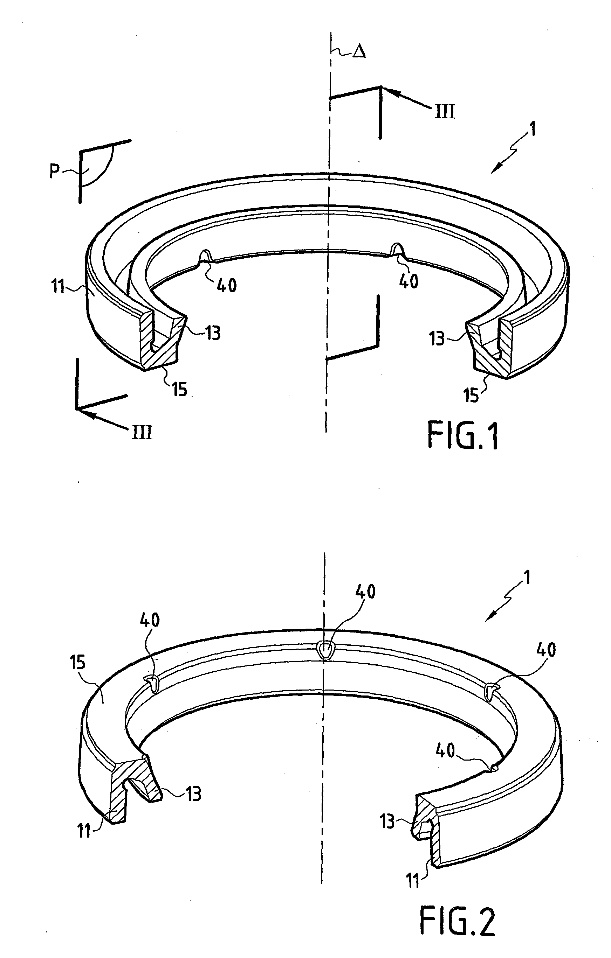

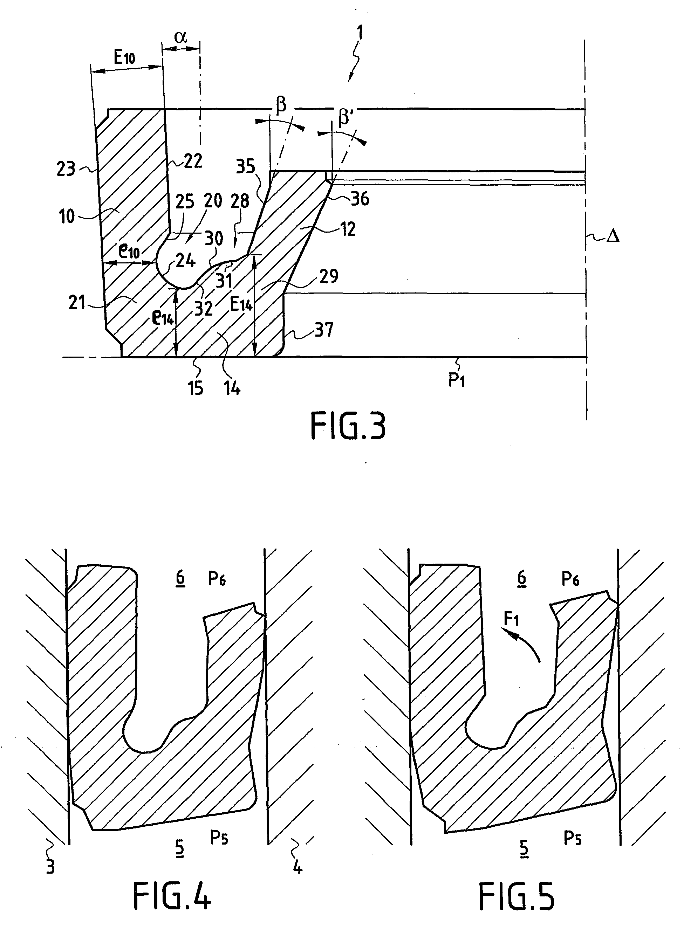

Une coupelle d'étanchéité annulaire, dite de ré-alimentation selon l'invention, telle qu'illustrée aux fig. **1** à **3** et désignée dans son ensemble par la référence **1**, est destinée à être interposée entre deux pièces 3 et 4 coaxiales, telles qu'illustrées schématiquement aux **fig. 4** et **5** qui sont mobiles en translation axiale. Les pièces **3** et **4** peuvent, par exemple, être constituées par un cylindre **3** et un piston **4** d'un système de commande de frein, par exemple.

La coupelle d'étanchéité **1** est alors destinée à assurer une fonction de réalimentation ou de clapet anti-retour, entre les deux chambres annulaires **5**, **6** délimitées par le piston **4** et le cylindre **3** et séparées par la coupelle **1**. Ainsi, la coupelle **1** doit être à même d'isoler, de façon étanche, les chambres **5** et **6** lorsque la pression **P**_{**6**}, au sein de la chambre aval, est supérieure à celle **P**_{**5**}, au sein de la chambre amont **5.** En revanche, la coupelle **1** doit autoriser une circulation de fluide depuis la chambre amont **5** vers la chambre aval **6** lorsque la pression **P**_{**5**} est supérieure à la pression **P**_{**6**}.

La difficulté, dans la conception de la coupelle **1,** réside dans la détermination d'une forme offrant une souplesse suffisante à la coupelle pour permettre une réalimentation en fluide de la chambre amont 5 vers la chambre aval, lorsque la différence, entre les pressions **P**_{**5**} et **P**_{**6**} est faible, tout en offrant une résistance et une capacité d'isolement des chambres amont **5** et aval **6** suffisante pour maintenir des différences de pression importantes lorsque la pression **P**_{**6**} est très supérieure à la pression **P**_{**5**}. De plus, la forme de la coupelle **1** doit permettre une résistance de la coupelle **1** aux phénomènes d'extrusion, susceptibles d'apparaître en raison des déplacements relatifs du cylindre **3** et du piston **4**.

Afin d'assurer ces fonctions, la coupelle d'étanchéité **1** présente une forme générale annulaire, d'axe Δ. Par ailleurs, la coupelle présente, en section axiale selon un plan **P** contenant l'axe Δ, une forme en « U » plus particulièrement illustrée à la **fig. 3**. Ainsi, la section axiale de la coupelle **1** comprend une branche statique **10** définissant une lèvre annulaire **11** d'étanchéité statique, ainsi qu'une branche dynamique **12** définissant une lèvre, également annulaire, d'étanchéité dynamique **13.** Les branches statique **10** et dynamique **11** sont alors reliées par une âme **14** qui définit, à l'opposé des lèvres **11** et **13,** un talon annulaire **15.**

Selon l'exemple illustré, la lèvre d'étanchéité dynamique **13** est située à l'intérieur de la coupelle **1,** tandis que la lèvre d'étanchéité statique **11** est située à l'extérieure de cette même coupelle **1**. A l'état de repos sans contrainte extérieure, tel qu'illustré à la **fig. 3,** le talon **15** est sensiblement plan et se trouve contenu dans un plan **P**_{**1**}**,** sensiblement perpendiculaire à l'axe **Δ.**

La coupelle **1** peut être réalisée en tout matériau approprié lui conférant une élasticité suffisante, telle que, par exemple, un élastomère naturel ou synthétique, résistant aux conditions de températures et chimiques de mise en oeuvre.

Selon une caractéristique essentielle de l'invention, afin de conférer une souplesse suffisante à la coupelle pour lui offrir une grande sensibilité à la réalimentation, c'est-à-dire permettre une circulation de fluide depuis la chambre amont **15** vers la chambre aval **6** avec une très faible différence entre les pressions **P**_{**5**} et **P**_{**6**}, la région de raccordement **20,** entre la branche statique **10** et l'âme **14,** située à l'opposé du talon, présente une forme concave correspondant à une réduction locale des épaisseurs de la branche statique **10** et de l'âme **14** au niveau de cette région de raccordement, de manière à définir une zone de rotation ou pivotement **21**.

De manière préférée, les faces interne **22** et externe **23** de la lèvre d'étanchéité statique **11** ou de la branche statique **10** sont alors sensiblement parallèles en dehors de la zone de rotation **21**. Ainsi, la surface de raccordement **24**, entre la branche statique **10** et la zone de rotation **21** située à l'opposé du talon **15**, présente au moins un point d'inflexion **25.** Afin d'obtenir des caractéristiques de flexion optimales, tout en garantissant une grande stabilité de la branche statique, l'épaisseur minimale **e**_{**10**} de la branche statique **10** dans la zone de flexion, vaut entre 60 % et 85 % de l'épaisseur maximale **E**_{**10**} de la branche statique **10.** De façon plus particulièrement préférée, l'épaisseur minimale **e**_{**10**} est choisie pour valoir entre 65 % et 80 % de l'épaisseur **E**_{**10**}.

Afin d'assurer une bonne géométrie de la branche statique lors de la mise en contrainte de la coupelle **1,** les faces interne **22** et externe **23** de la lèvre d'étanchéité statique forment, avec l'axe Δ, un angle α compris entre 0° et 10°.

Par ailleurs, selon l'invention, afin d'assurer une bonne résistance de la coupelle **1** aux phénomènes d'extrusion, résultant du mouvement relatif du cylindre **3** et du piston **4**, la région de raccordement **28**, entre l'âme **14** et la branche dynamique **12** située à l'opposé du talon **15**, est, en partie au moins, convexe et correspond à une augmentation locale des épaisseurs de l'âme **14** et de la branche dynamique définissant ainsi une zone de rigidité **29**.

De manière préférée, la surface de raccordement **30**, entre la branche dynamique **12** et la zone de rigidité **29**, située à l'opposé du talon **15**, présente au moins un point d'inflexion **31**. De même, la surface de raccordement, située à l'opposé du talon **15** entre la zone de flexion **21** et la zone de rigidité **29**, présente également au moins un point d'inflexion **32**. Ainsi, la surface interne, reliant la branche statique **10** à la branche dynamique **12**, est sensiblement continue et régulière.

Afin de garantir un bon rapport de rigidité, l'épaisseur minimale **e**_{**14**} de l'âme dans la zone de flexion **21** vaut entre 45 % et 80 % de l'épaisseur maximale **E**_{**14**} de l'âme dans la zone de rigidité **29.** De manière encore plus préférée, l'épaisseur **e**_{**14**} est choisie de façon à valoir entre 68 % et 75 % de l'épaisseur **E**_{**14**}.

Selon une autre caractéristique de l'invention, afin de conférer une souplesse suffisante à la lèvre dynamique **12,** les faces interne **35** et externe **36** de cette dernière sont, de préférence, tronconiques et convergent l'une vers l'autre. De plus, les faces interne et externe sont conformées pour former, respectivement, un angle β et β' avec l'axe Δ, les angles β et β' étant, de préférence, compris entre 15° et 30°.

Par ailleurs, selon une forme préférée mais non strictement nécessaire de réalisation de l'invention, la surface du talon **15** forme un angle sensiblement droit avec la surface latérale **37** de l'âme, délimitant la zone de rigidité **29** et raccordant le talon **15** à la branche **12** ou la lèvre **13** d'étanchéité dynamique.

La conformation de la coupelle 1 ainsi réalisée permet d'obtenir un comportement de cette coupelle supérieur à celui des coupelles selon l'art antérieur.

En effet, la coupelle **1** selon l'invention permet d'obtenir une parfaite efficacité d'arrêt de la coupelle **1** et d'isolation des chambres **1** et **6** lorsque la pression **P**_{**6**} est supérieure à la pression **P**_{**5**}, avec une différence pouvant atteindre 260 bar dans des conditions extrêmes d'utilisation et valant, en conditions normales de fonctionnement, entre 20 bar et 60 bar.

Par ailleurs, compte tenu de sa configuration et de sa conformation, la coupelle **1** selon l'invention offre également une grande sensibilité à la réalimentation lorsque la pression **P**_{**5**} est légèrement supérieure à la pression **P**_{**6**} autorisant une circulation de fluide entre la chambre amont **5** et la chambre aval **6.** Dans cette configuration, la flexibilité de la zone **21**, formant une sorte de zone charnière, permet un déplacement de l'ensemble formé par la zone de rigidité **29** et la lèvre d'étanchéité dynamique **13,** dans le sens de la flèche **F**_{**1**}**,** lorsque la pression **P**_{**5**} est supérieure à la pression **P**_{**6**} d'une valeur inférieure à 400 mbar. Afin de favoriser cette fonction de ré-alimentation, il est, de préférence, aménagé, au niveau de l'angle formé par le talon **15** et la surface latérale **37**, au moins une et, de préférence, une série d'encoches **40** de ré-alimentation qui permettent d'assurer le passage du fluide, même lorsque le talon vient en butée contre le piston **4**.

Ainsi, la configuration de la coupelle selon l'invention permet d'offrir une parfaite résistance aux fortes pressions, tout en assurant une grande sensibilité de ré-alimentation et cela dans un encombrement réduit. En effet, la structure proposée par l'invention permet de réaliser une garniture ayant des qualités mécaniques recherchées, avec une section droite transversale s'inscrivant dans un rectangle de 4,5 mm par 3 mm.

L'invention n'est pas limitée à l'exemple décrit et représenté car diverses modifications peuvent y être apportées sans sortir de son cadre.

## Revendications

1. Coupelle d'étanchéité annulaire d'axe Δ, dite de ré-alimentation, qui est destinée à être disposée entre un cylindre **(3)** et un piston **(4)** hydrauliques et qui présente une section axiale en « U » comprenant :
■ une branche statique **(10)** définissant une lèvre annulaire **(11)** d'étanchéité statique,
■ une branche dynamique **(12)** définissant une lèvre annulaire **(13)** d'étanchéité dynamique,
■ et une âme **(14)** reliant les branches statique **(10)** et dynamique **(12)** et définissant, à l'opposé des lèvres, un talon annulaire **(15),**
**caractérisée en ce que** la surface de raccordement **(24)**, entre la branche statique **(10)** et l'âme **(14)**, située à l'opposé du talon **(15)**, présente une forme concave correspondant à une réduction locale des épaisseurs de la branche statique **(10)** et de l'âme **(14)** au niveau de la région de raccordement entre la lèvre statique **(11)** et l'âme **(14)**, de manière à définir une zone de rotation **(21)**.

2. Coupelle d'étanchéité selon la revendication 1, **caractérisée en ce que** la surface de raccordement **(24)**, entre la branche statique **(10)** et la zone de rotation **(21)**, située à l'opposé du talon **(15)**, présente au moins un point d'inflexion **(25)**.

3. Coupelle d'étanchéité selon la revendication 1 ou 2, **caractérisée en ce que** l'épaisseur minimale **(e**_{**10**}**)** de la branche statique **(10),** dans la zone de rotation **(21),** vaut entre 60 % et 85 % de l'épaisseur maximale (**E**_{**10**}) de la branche statique **(10)** et, de préférence, entre 65 % et 80 %.

4. Coupelle d'étanchéité selon l'une des revendications 1 à 3, **caractérisée en ce que** les faces interne **(22)** et externe **(23)** de la lèvre d'étanchéité statique **(11)** sont sensiblement parallèles en dehors de la zone de flexion **(21).**

5. Coupelle d'étanchéité selon l'une des revendications 1 à 4, **caractérisée en ce que** les faces interne **(22)** et externe **(23)** de la lèvre statique **(11)** forment, avec l'axe Δ, un angle (α) compris entre 0° et 10°.

6. Coupelle d'étanchéité selon l'une des revendications 1 à 5, **caractérisée en ce que** les surfaces interne (**35)** et externe **(36)** de la lèvre d'étanchéité dynamique **(12)** convergent l'une vers l'autre en direction du talon **(15)** de la coupelle.

7. Coupelle d'étanchéité selon l'une des revendications 1 à 6, **caractérisée en ce que** les faces interne **(35)** et externe **(36)** de la lèvre d'étanchéité dynamique **(12)** sont tronconiques et forment, avec l'axe Δ, un angle (β, β') compris entre 15° et 30°.

8. Garniture d'étanchéité selon l'une des revendications 1 à 7, **caractérisée en ce que** l'âme **(14)** présente, au niveau de la surface de raccordement, entre le talon et sa face latérale située dans le prolongement de la lèvre d'étanchéité dynamique, au moins une encoche de ré-alimentation **(40).**

9. Coupelle d'étanchéité selon l'une des revendications 1 à 8, **caractérisée en ce que** la surface de raccordement **(30)**, entre l'âme **(14)** et la branche dynamique **(12)**, située à l'opposé du talon **(15)**, est, en partie au moins, convexe et correspond à une augmentation locale, des épaisseurs de l'âme **(14)** et de la branche dynamique **(12)**, définissant une zone de rigidité **(29).**

10. Coupelle d'étanchéité selon la revendication 9, **caractérisée en ce que** la surface de raccordement **(30),** entre la branche dynamique **(12)** et la zone de rigidité **(29)**, située à l'opposé du talon **(15)**, présente au moins un point d'inflexion **(31)**.

11. Coupelle d'étanchéité selon la revendication 9 ou 10, **caractérisée en ce que** la surface de raccordement située à l'opposé du talon, entre la zone de flexion **(21)** et la zone de rigidité **(29)**, présente au moins un point d'inflexion **(32)**.

12. Coupelle d'étanchéité selon l'une des revendications 9 à 11, **caractérisée en ce que** l'épaisseur minimale (**e**_{**14**}) de l'âme **(14)** dans la zone de flexion **(21)** vaut entre 45 % et 80 % de l'épaisseur maximale (**E**_{**14**}) de l'âme **(14)** dans la zone de rigidité **(29)** et, de préférence, entre 68 % et 75 %.

13. Coupelle d'étanchéité selon l'une des revendications 9 à 12, **caractérisée en ce que** la surface du talon **(15),** d'une part, est sensiblement plane et perpendiculaire à l'axe Δ de la coupelle et, d'autre part, forme un angle sensiblement droit avec la surface latérale **(37)** de l'âme **(14)** délimitant la zone de rigidité **(29)** et raccordant le talon **(15)** à la lèvre d'étanchéité dynamique **(13).**

14. Coupelle d'étanchéité selon l'une des revendications 1 à 13, **caractérisée en ce que** la lèvre d'étanchéité statique **(11)** est située sur l'extérieur de la coupelle, tandis que la lèvre d'étanchéité dynamique **(13)** est située sur l'intérieur de la coupelle.
